# EUROPEAN PATENT APPLICATION

(11) **EP 2 887 606 A1**
(43) Date of publication of application: **24.06.2015**
(21) Application number: 13199063.2
(22) Date of filing: 20.12.2013
(51) Int. Cl.: H04L 29/06, H04L 12/28

(54) **A system and a method for distributing multimedia content in a home network**

(71) Applicant: Advanced Digital Broadcast S.A., 1292 Chambesy (CH)
(72) Inventor: Michalczak, Maciej, 65-119 Zielona Gora (PL)
(74) Representative: Pawlowski, Adam

(57) **Abstract**

A method for distributing multimedia content in a home network, comprising the steps of: broadcasting (14) multimedia content from a headend system (100) to a plurality of home networks (200), each home network (200) comprising a gateway (201) configured to receive multimedia content encrypted using a broadcast content key from the headend system (100) and a plurality of home devices (204, 205) configured to receive multimedia content from the gateway (201); registering (10) the plurality of home devices (201, 204, 205) of a particular home network (200) at a domain controller server (105) by providing identifiers of the home devices (201, 204, 205) to be registered for the particular home network (200); generating (19) a domain content license for a home network (200) on the basis of identifiers of the devices (201, 204, 205) registered for the particular home network (200), the domain content key allowing to encrypt multimedia content such that it can be decrypted by the devices (201, 204, 205) having the particular identifiers; transmitting (20) the domain content license to the gateway (201) of the particular home network (200); in the gateway (201), decrypting (15) the received (14) multimedia content, encrypting (21) the multimedia content using the keys extracted from the domain license and providing the content encrypted by the domain content key to the home devices (204, 205).

## Description

The present invention relates to a system and a method for distributing multimedia content in a home network.

A home network, also called a home area network (HAN), is a local area network that develops from the need to facilitate communication and interoperability among digital devices present inside or within the close vicinity of a home. Such devices may include digital television set-top boxes, tv sets, mobile devices, game consoles, etc.

Multimedia content is often protected by conditional access (CA) security mechanisms, which guarantee safety and security of delivery between a content provider and the end user. The CA systems allow the encrypted content to be broadcast to a plurality of users, but to be decrypted only by the users in possession of appropriate decryption rights. CA security mechanisms are often proprietary and compatible with a limited number of devices. For example, typically only a limited number of devices of the home network are capable of properly receiving and decrypting the CA-protected content. For example, the CA security mechanisms may be handled only by the set-top box and a tv set, while the other devices, such as other tv sets, mobile devices, game consoles etc. may be not capable of handling the CA security system. In a typical scenario, the CA protected content would be not available to these other devices.

It would be advantageous to provide a method and system for distributing multimedia content in a home network that would make the content available to a plurality of devices within the home network while keeping the content secure.

The object of the invention is a method for distributing multimedia content in a home network, comprising the steps of: broadcasting multimedia content from a headend system to a plurality of home networks, each home network comprising a gateway configured to receive multimedia content encrypted using a broadcast content key from the headend system and a plurality of home devices configured to receive multimedia content from the gateway; registering the plurality of home devices of a particular home network at a domain controller server by providing identifiers of the home devices to be registered for the particular home network; generating a domain content license for a home network on the basis of identifiers of the devices registered for the particular home network, the domain content key allowing to encrypt multimedia content such that it can be decrypted by the devices having the particular identifiers; transmitting the domain content license to the gateway of the particular home network; in the gateway, decrypting the received multimedia content, encrypting the multimedia content using the keys extracted from the domain license and providing the content encrypted by the domain content key to the home devices.

Preferably, the method comprises allowing a limited number of home devices to be registered for the particular home network.

Preferably, the identifiers of the devices are public keys.

Preferably, the domain content license comprises usage rights information for multimedia content.

Preferably, the domain content key is generated upon receiving a request from the gateway.

Preferably, the domain content license is generated for a particular multimedia content event.

Preferably, the method further comprises the step of storing the received multimedia content at a mass storage of the gateway and encrypting the multimedia content from the mass storage with a time delay using the received domain content license and providing the content encrypted by the domain content key to the devices.

Another object of the present invention is a system for distributing multimedia content in a home network, the system comprising: a headend system for broadcasting multimedia content to a plurality of home networks, each home network comprising a gateway configured to receive multimedia content encrypted using a broadcast content key from the headend system and a plurality of home devices configured to receive multimedia content from the gateway; a domain controller server configured to register the plurality of home devices of a particular home network by receiving identifiers of the home devices to be registered for the particular home network; a license controller server configured to generate a domain content license for a home network on the basis of identifiers of the devices registered for the particular home network at the domain controller server, the domain content key allowing to encrypt multimedia content such that it can be decrypted by the devices having the particular identifiers and to transmit the domain content license to the gateway of the particular home network; wherein the gateway of the home network is configured to decrypt the received multimedia content, encrypt the multimedia content using the received domain content license and provide the content encrypted by the domain content key extracted from the domain content license to the home devices.

Preferably, the domain controller server is configured to limit the number of home devices which can be registered for the particular home network.

Preferably, the identifiers of the devices are public encryption keys.

Preferably, the domain content license comprises domain content keys and usage rights information for multimedia content.

Preferably, the license controller server is configured to generate the domain content license upon receiving a request from the gateway.

Preferably, the license controller server is configured to generate the domain content license for a particular multimedia content event.

Preferably, the gateway is connected to a mass storage and configured to encrypt the multimedia content from the storage with a time delay using the received domain content license and provide the content encrypted by the domain content key to the devices.

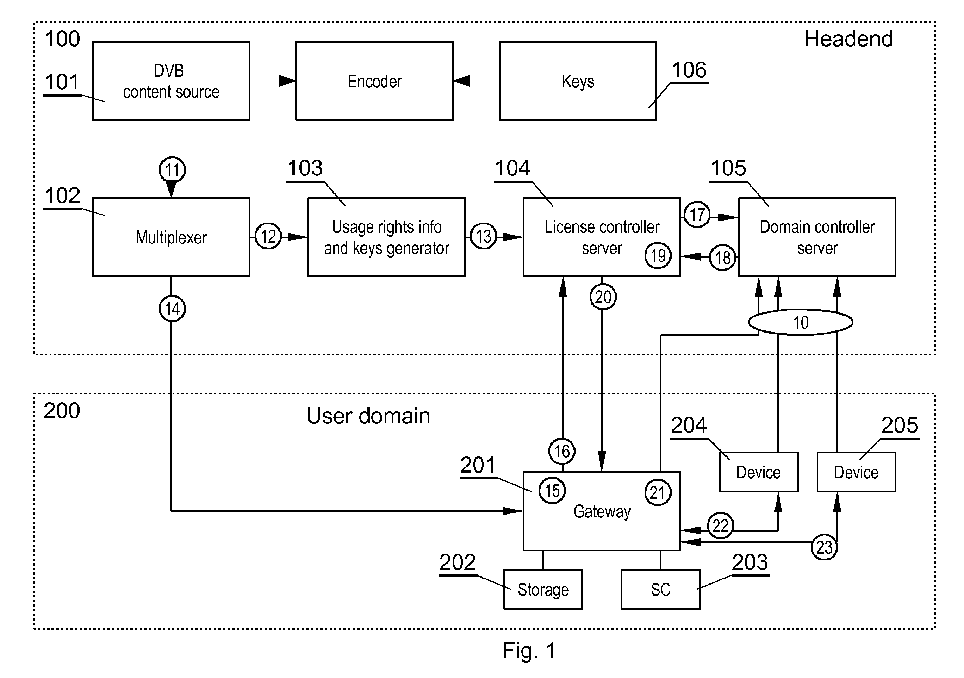

The system and method for distributing multimedia content in a home network is shown by means of example embodiment on a drawing, in which Fig. 1 illustrates a structure of the system and the steps of the method.

The system for distributing multimedia content in a home network is shown in Fig. 1. The presented embodiment relates to transmission of content according to DVB (Digital Video Broadcasting) standards.

The system comprises a headend system 100 which broadcasts in step 11 multimedia content to a plurality of user home networks 200, i.e. user domains.

The system comprises a DVB content source 101 providing multimedia content. The content is encrypted using broadcast content keys 106, such as Conditional Access security keys. The content may be identified by parameters, such as ONID (Original Network ID), TSID (Transport Stream ID), SVID (Service ID) and optionally EVID (Event ID).

The content is received in step 11 by a multiplexer 102, which combines content from various sources and generates transport streams to be broadcast to user domains 200. The multiplexer 102 also provides a list of encrypted broadcast events to a usage rights info generator 103 in step 12. The usage rights include identifiers of transmitted events, such as ONID, TSID, SVID and EVID along with information on CA restrictions for the particular event. The generator 103 generates content keys for particular events (including usage rights info (URI) if required by the particular CA protection system) and transmits the content keys in step 13 to a license controller server 104. The license controller server generates a domain content key to allow the content to be encrypted for reception by the home devices in the user domain of the home network 200.

At the home network, a gateway 201 receives the broadcast multimedia content in step 14. The gateway 201 may be a set-top box for receiving a particular type of DVB broadcast signal, such as DVB-C, DVB-S, DVB-T or DVB-H. The gateway 201 is capable of decrypting the encrypted content in step 15 by using the CA security system e.g. with a smart card (SC) 203. A plurality of home devices 204, 205 (such as personal computers, laptops, palmtops, smartphones, set-top boxes, tv sets etc) are connected with the gateway 201. In order to make the content (which could be shared due to URI CA) available to the devices 204, 205, the STB gateway asks in step 16 the license controller server 104 for a domain content license for the particular event, identified by e.g. ONID, TSID, SVID and optionally EVID.

Upon initialization of the system, the gateway 201 and the devices 204, 205 are registered for the user domain in step 10. The registration is initiated by the user. For example, the user of the home network may setup an account at the domain controller server, wherein the account may determine the number of devices within the home network to which the content may be shared, user rights (including parental control rights) for particular devices, content rights (access to premium or normal content) etc. The parameters determined at the setup of the account define the accessibility of a particular device 204, 205 to the content shared by the gateway 201. Each device is registered at the domain controller server 105 by providing at least an identifier of the device, such as a X.509 certificate, which is unique for the device and can be used to generate the domain content key.

When the license controller Server 104 receives a request for domain license, it verifies the gateway 201 membership in step 17 at the domain controller server. The verification may involve checking whether the particular gateway 201 is registered at the domain controller server 105, what are its usage rights, what are the home devices 204, 205 associated with that gateway 201 etc. Upon successful verification result received in step 18, the license controller server 104 in step 19 generates a domain content license based at least on the identifiers of home devices registered for the home network associated with the particular gateway 201. The domain content license is then sent to the gateway 201 in step 20. The domain content license may preferably contain usage rights information.

For example, if the home devices 201, 204, 205 identifiers are provided in form of an X.509 certificate, then the domain content license may comprise public keys for the particular home devices 201, 204, 205.

Upon receiving the domain license, the gateway 201 in step 21 extracts the domain content key from the domain license, and encrypts the multimedia content using the domain content key. Therefore, the encrypted content is accessible to (i.e. can be decrypted by) the gateway 201, and the devices 204, 205 registered for the particular home network (user domain). Preferably, it can be decrypted only by the devices 204, 205 registered for the particular home network of the gateway 201 (and the gateway itself). The encryption may utilize for example AES-CTR mechanism or other mechanisms, depending on the type of Digital Rights Management system used in the system. The gateway 201 may generate content in a PIFF format (Protected Interoperable File Format) or other format, depending on the encryption technology used inside user domain and selected transport, including an embedded domain license. The content is then provided in step 22 to the devices 204, 205 of the home network. The gateway 201 may utilize the DRM PlayReady (R) content protection mechanism. The content may be broadcast to the other devices 204, 205 or provided on request in step 23 from these devices 204, 205. Encrypted content may be stored at a mass storage device 202, such as a hard disk of the gateway 201 or in a cloud storage. This allows to provide the multimedia content to home devices 204 with a time delay after reception of the content (provided that the time delay does not exceed usage rights restrictions).

The content is transmitted from the headed to user domain via transmission channels typical for DVB-C, DVB-S, DVB-T or DVB-H networks. The gateway 201 communicates with the license controller server for example via the Internet (using Ethernet, WiFi, a return channel in a DVB-C system (e.g. DOCSIS), preferably via an encrypted channel).

It can be easily recognized, by one skilled in the art, that the aforementioned method for distributing multimedia content may be performed and/or controlled by one or more dedicated electronic circuits or computer programs. Such computer programs are typically executed by utilizing the computing resources of the device. The computer programs can be stored in a non-volatile memory (or otherwise a non-transitory computer storage medium), for example a flash memory or in a volatile memory, for example RAM and are executed by the processing unit. These memories are exemplary recording media for storing computer programs comprising computer-executable instructions performing all the steps of the method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

In addition, any combination of the appended claims in envisaged in the present application.

## Claims

1. A method for distributing multimedia content in a home network, comprising the steps of:
- broadcasting (14) multimedia content from a headend system (100) to a plurality of home networks (200), each home network (200) comprising a gateway (201) configured to receive multimedia content encrypted using a broadcast content key from the headend system (100) and a plurality of home devices (204, 205) configured to receive multimedia content from the gateway (201);
- registering (10) the plurality of home devices (201, 204, 205) of a particular home network (200) at a domain controller server (105) by providing identifiers of the home devices (201, 204, 205) to be registered for the particular home network (200);
- generating (19) a domain content license for a home network (200) on the basis of identifiers of the devices (201, 204, 205) registered for the particular home network (200), the domain content key allowing to encrypt multimedia content such that it can be decrypted by the devices (201, 204, 205) having the particular identifiers;
- transmitting (20) the domain content license to the gateway (201) of the particular home network (200);
- in the gateway (201), decrypting (15) the received (14) multimedia content, encrypting (21) the multimedia content using the keys extracted from the domain license and providing the content encrypted by the domain content key to the home devices (204, 205).

2. The method according to claim 1, comprising allowing a limited number of home devices (201, 204, 205) to be registered for the particular home network (200).

3. The method according to any of previous claims, wherein the identifiers of the devices (201, 204, 205) are public keys.

4. The method according to any of previous claims, wherein the domain content license comprises usage rights information for multimedia content.

5. The method according to any of previous claims, wherein the domain content key is generated (19) upon receiving (16) a request from the gateway (201).

6. The method according to any of previous claims, wherein the domain content license is generated (19) for a particular multimedia content event.

7. The method according to any of previous claims, further comprising the step of storing the received (14) multimedia content at a mass storage (202) of the gateway (201) and encrypting (21) the multimedia content from the mass storage (202) with a time delay using the received domain content license and providing the content encrypted by the domain content key to the devices (204, 205).

8. A system for distributing multimedia content in a home network, the system comprising:
- a headend system (200) for broadcasting (14) multimedia content to a plurality of home networks (200), each home network (200) comprising a gateway (201) configured to receive multimedia content encrypted using a broadcast content key from the headend system (100) and a plurality of home devices (204, 205) configured to receive multimedia content from the gateway (201);
- a domain controller server (105) configured to register (10) the plurality of home devices (201, 204, 205) of a particular home network (200) by receiving identifiers of the home devices (201, 204, 205) to be registered for the particular home network (200);
- a license controller server (104) configured to generate (19) a domain content license for a home network (200) on the basis of identifiers of the devices (201, 204, 205) registered for the particular home network (200) at the domain controller server (105), the domain content key allowing to encrypt multimedia content such that it can be decrypted by the devices (201, 204, 205) having the particular identifiers and to transmit (20) the domain content license to the gateway (201) of the particular home network (200);
- wherein the gateway (201) of the home network (200) is configured to decrypt (15) the received (14) multimedia content, encrypt (21) the multimedia content using the received domain content license and provide the content encrypted by the domain content key extracted from the domain content license to the home devices (204, 205).

9. The system according to claim 7, wherein the domain controller server (105) is configured to limit the number of home devices (201, 204, 205) which can be registered for the particular home network (200).

10. The method according to any of claims 8-9, wherein the identifiers of the devices (201, 204, 205) are public encryption keys.

11. The method according to any of claims 8-9, wherein the domain content license comprises domain content keys and usage rights information for multimedia content.

12. The method according to any of claims 8-9, wherein the license controller server (104) is configured to generate the domain content license upon receiving (16) a request from the gateway (201).

13. The method according to any of claims 8-9, wherein the license controller server (104) is configured to generate the domain content license for a particular multimedia content event.

14. The method according to any of claims 8-9, wherein the gateway (201) is connected to a mass storage (202) and configured to encrypt (21) the multimedia content from the storage (202) with a time delay using the received domain content license and provide the content encrypted by the domain content key to the devices (204, 205).
